# EUROPEAN PATENT SPECIFICATION

(11) **EP 4 331 180 B1**
(45) Date of publication and mention of the grant of the patent: **02.04.2025**
(21) Application number: 22720079.7
(22) Date of filing: 22.04.2022
(51) Int. Cl.: H04L 9/40, H04L 9/32, G06F 21/10, H04L 67/104, H04N 21/4405

(54) **CIPHER TEXT VALIDATION**
VALIDIERUNG VON CHIFFRIERTEXT
VALIDATION DE TEXTE CHIFFRÉ

(30) Priority: 26.04.2021 SE 2150527
(43) Date of publication of application: 06.03.2024
(73) Proprietor: Hive Streaming AB, 112 51 Stockholm (SE)
(72) Inventor: DAHLSTRÖM, Andreas, 112 51 Stockholm (SE)
(74) Representative: Kransell & Wennborg KB
(86) International application number: PCT/SE2022/050394
(87) International publication number: WO 2022/231502

(56) References cited:
- US-A1- 2004 158 546
- US-A1- 2007 150 596
- US-A1- 2011 125 849

## Description

### TECHNICAL FIELD

The present disclosure relates to a method of a data publishing device of distributing data content to receiving devices in a network and a method of a device of receiving data content in a network, as well as devices performing the methods.

### BACKGROUND

In many data distribution scenarios, verification of received data is important. One such scenario is when data such as software installers, video, audio, text content, etc., is stored in a third party, non-trusted location. This includes third party caches or peer-to-peer (P2P) distribution where a data consumer trusts the data publisher but not necessarily trusts intermediary data sources.

A common solution is for the data publisher to either digitally sign the content or provide a separate cryptographic hash, allowing the end data consumer to safely verify the publisher and/or integrity of the received data.

In cases where the data publisher did not provide a means for verifying the data content, the end data consumer is open to several cyber-attacks ranging from denial-of-service (DoS) attacks to attacks giving an intruder full access to protected systems.

It is oftentimes complex for either technical or organizational reasons to change either the distribution chains of the data publisher or intermediary data sources, it is desirable to be able to verify the data content of the data publisher without changing any part of the distribution chain.

US 2011/0125849 discloses a method for distributing content using a P2P distribution system. The distribution system comprises a P2P network connected to a server system, wherein the server system is configured to divide the content in pieces and to provide the P2P network with piece variants of one or more pieces. The method comprises the steps of providing a communication session between a client and the server system; the client sending a content request to the server system, the client receiving in response to the content request one more piece variant identifiers and distribution information comprising integrity information of all piece variants provided by the server system.

US 2004/0158546 discloses a system for downloading a target file from a source computer. The target file is broken up into a plurality of chunks. The integrity of each chunk is verified by calculating a digest for each chunk and comparing the calculated digest with a prestored digest for that chunk. A manifest file is created which contains the digest for each chunk.

US 2007 /0150596 discloses publishing content using a peer-to-peer content distribution system. A publisher is required to request authorization to publish from an authorization body. Resources such as tracker and seed nodes are allocated in a peer-to-peer content distribution system and pre-processing of content to be published is carried out.

### SUMMARY

One objective is to solve, or at least mitigate, this problem in the art and thus to provide improved methods of distributing and downloading data content in a network.

This objective is attained in a first aspect by a method of a data publishing device of distributing data content to receiving devices in a network. The method comprises encrypting the data content with a secret encryption key shared with the receiving devices, distributing the encrypted data content to at least one of the receiving devices, and sending a subset of the encrypted data content to at least another one of the receiving devices upon request, which downloads the encrypted data content from one or more other receiving devices in the network.

This objective is attained in a second aspect by a method of a device of receiving data content in a network. The method comprises receiving encrypted data content from another device in the network, the data content having been encrypted with a symmetric key shared with a trusted data content publisher device, requesting from the trusted data content publisher device a subset of the encrypted data content received from said another device (11) in the network, and verifying whether or not the subset of the encrypted data content received from the trusted data content publisher device matches a selected section of the encrypted data content received from said another device in the network, wherein a match indicates that the encrypted data content received from said another device can be trusted.

This objective is attained in a third aspect by a data publishing device configured to distribute data content to receiving devices in a network, the data publishing device comprising a processing unit and a memory, said memory containing instructions executable by said processing. The data publishing device is operative to encrypt the data content with a secret encryption key shared with the receiving devices, distribute the encrypted data content to at least one of the receiving devices, and send a subset of the encrypted data content to at least another one of the receiving devices upon request, which downloads the encrypted data content from one or more other receiving devices in the network.

This objective is attained in a fourth aspect of the invention by a device configured to receive data content in a network, the device comprising a processing unit and a memory, said memory containing instructions (212) executable by said processing unit. The device is operative to receive encrypted data content from another device in the network, the data content having been encrypted with a symmetric key shared with a trusted data content publisher device, request from the trusted data content publisher device a subset of the encrypted data content received from said another device in the network, and verify whether or not the subset of the encrypted data content received from the trusted data content publisher device matches a selected section of the encrypted data content received from said another device in the network, wherein a match indicates that the encrypted data content received from said another device (11) can be trusted.

Thus, a data publisher distributes a piece of content in the network, referred to as a stream or a fragment, which is encrypted by a symmetric key shared by indented receiving client devices in the network. The encrypted content is for instance distributed to a first client device which in its turn distributes the encrypted content to a second client device. The second client device may thus use the shared key to decrypt and subsequently render the content, being e.g. a video stream.

However, if a malicious device would distribute a piece of malicious content to the second client having been encrypted with the same shared key, it is not possible for the second client device to distinguish whether the encrypted data content and subsequently the resulting decrypted data content - referred to as plaintext - originates from a trusted device or a malicious device. It would thus be possible for the malicious device to spoof the second client device since a shared key is used for encryption/decryption.

To overcome this problem, the second client device turns to the data publisher when receiving the encrypted data content - from the first client device and/or the malicious device - and makes a request to download a subset of the received encrypted content (which typically has an identifier associated with it such that the second client device may signal to the data publisher for which encrypted data content the request is made).

In an example, the encrypted data content may have a size of 1 GB while the subset only constitutes 256 bits of the 1-GB encrypted content. The subset may constitute the last 256 bits of the total 1 GB encrypted data content. In other words, the subset constitutes a very small part of the encrypted data content from which it is derived.

The second client device will thus compare the 256-bit subset with the last 256 bits of the received encrypted data content, and if the two 256-bit sets are identical, the data content is considered to not have been manipulated wherein the received encrypted data content is decrypted and the plaintext data content is rendered at the second client device. If the two 256-bit sets do not match, the received encrypted data content is discarded.

Various embodiments of the invention will be discussed in the following.

Generally, all terms used in the claims are to be interpreted according to their ordinary meaning in the technical field, unless explicitly defined otherwise herein. All references to "a/an/the element, apparatus, component, means, step, etc." are to be interpreted openly as referring to at least one instance of the element, apparatus, component, means, step, etc., unless explicitly stated otherwise. The steps of any method disclosed herein do not have to be performed in the exact order disclosed, unless explicitly stated.

### BRIEF DESCRIPTION OF THE DRAWINGS

Aspects and embodiments are now described, by way of example, with reference to the accompanying drawings, in which:
Figure 1 shows a prior art approach of distributing data content in a network;
Figure 2 illustrates a malicious device injecting content in the network;
Figure 3 illustrates distribution of data content in a network according to an embodiment;
Figure 4 shows a flowchart illustrating a method of a data publisher of distributing data content in a network according to an embodiment;
Figure 5 shows a flowchart illustrating a method of a device of receiving data content in a network according to an embodiment;
Figure 6 shows a flowchart illustrating a method of a device of receiving data content in a network according to another embodiment;
Figure 7 illustrates a data publishing device according to an embodiment; and
Figure 8 illustrates a client device according to an embodiment.

### DETAILED DESCRIPTION

The aspects of the present disclosure will now be described more fully hereinafter with reference to the accompanying drawings, in which certain embodiments are shown.

These aspects may, however, be embodied in many different forms and should not be construed as limiting; rather, these embodiments are provided by way of example so that this disclosure will be thorough and complete, and to fully convey the scope of all aspects to those skilled in the art. Like numbers refer to like elements throughout the description.

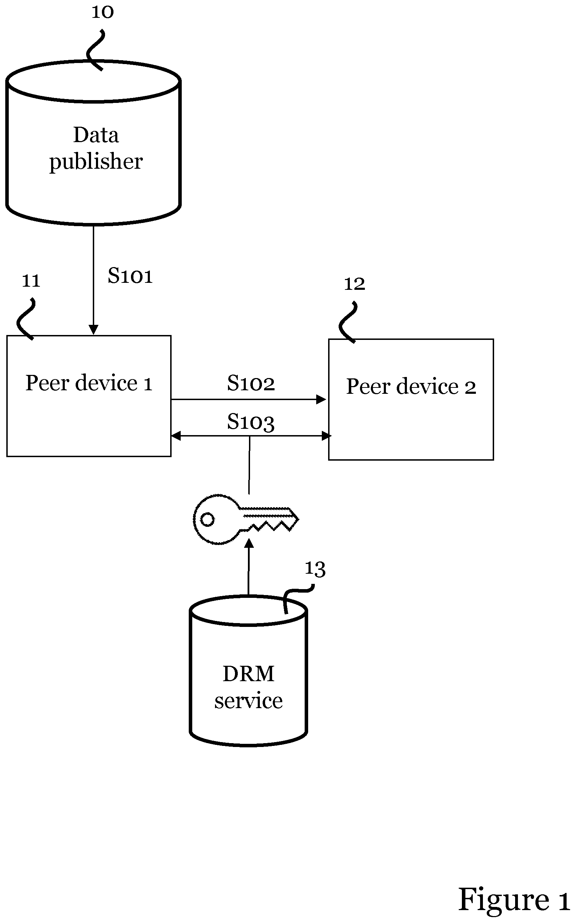

Figure 1 illustrates a problem in the art of distributing data in a P2P scheme (even though this problem is relevant for other types of distribution systems as well).

A data publisher 10 in the form of e.g. a content delivery network (CDN) distributes data content to a first client device 11, such as a smart phone, laptop, tablet, etc., utilizing for instance Hypertext Transfer Protocol Secure (HTTPS) in step S101.

In this example, the data content is encrypted with a shared key which may be provided to the first client device 11 and second client device 12 by for instance a digital rights management (DRM) service 13. Any appropriate encryption algorithm may be employed, such as e.g. Advanced Encryption Standard (AES).

In a P2P system, one of the benefits is that the client devices 11, 12 (commonly referred to as peer devices in a P2P system) may share data content among each other. In other words, the first peer device 11 may in step S102 share at least a fragment or stream of the encrypted data content downloaded from the data publisher 10 with the second peer device 12, while the second peer device 12 may download other fragments of the data content from other peer devices (or from the source 10). A benefit with this approach is that the second peer device 12 will not burden the data publisher 10 with downloading the data content. Embodiments will be described with reference to a P2P system, but may be applied in any appropriate system where data content is distributed from a source to clients.

Thus, the first peer device 11 downloads in step S101 encrypted data content from the publisher 10, decrypts the encrypted data content using the shared key acquired from the DRM service 13 in step S103 and renders the content on a video player in case the data content constitutes video data.

Correspondingly, the second peer downloads in step S102 all, or fragments of, the encrypted data content shared by the first peer device 11, decrypts the encrypted data content using the same shared key acquired from the DRM service 13 in step S103 and renders the content on a video player. It should be noted that the peer devices 12, 13 not necessarily download the key from the DRM service 13, but may have been preconfigured with the key.

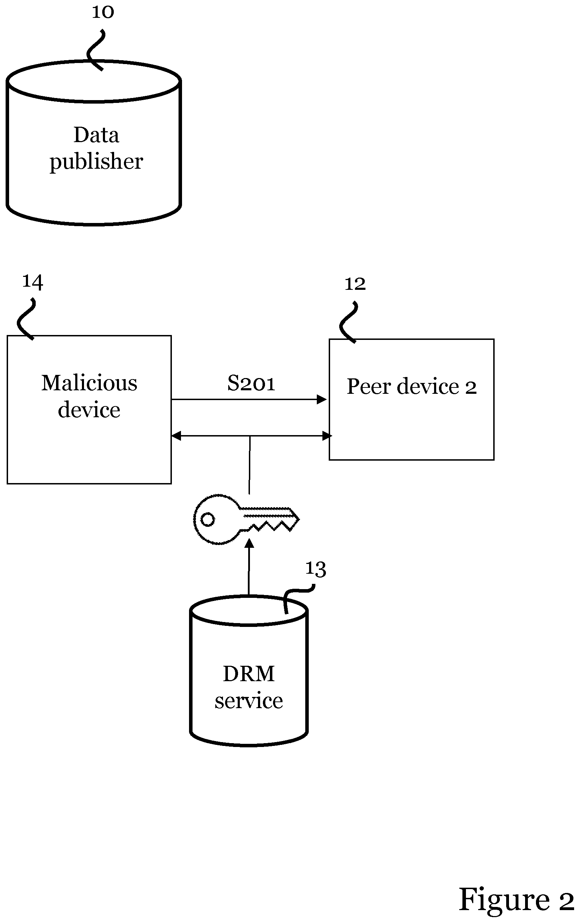

In Figure 2, if a malicious device 14 has access to the shared key distributed by the DRM service 13, it is possible for the malicious device 14 to encrypt malicious data (for instance with purpose to inject data causing inconvenience or even damage to the second per device 12 and/or its user) and distribute the encrypted malicious data to the second peer device 12 (or any other device using the shared key) in step S201.

The malicious device 14 hence acts as an intermediary data source injecting malicious data encrypted with the correct, shared key. The second peer device 12 cannot validate the received encrypted fragment since the correct key has been used for the symmetric encryption.

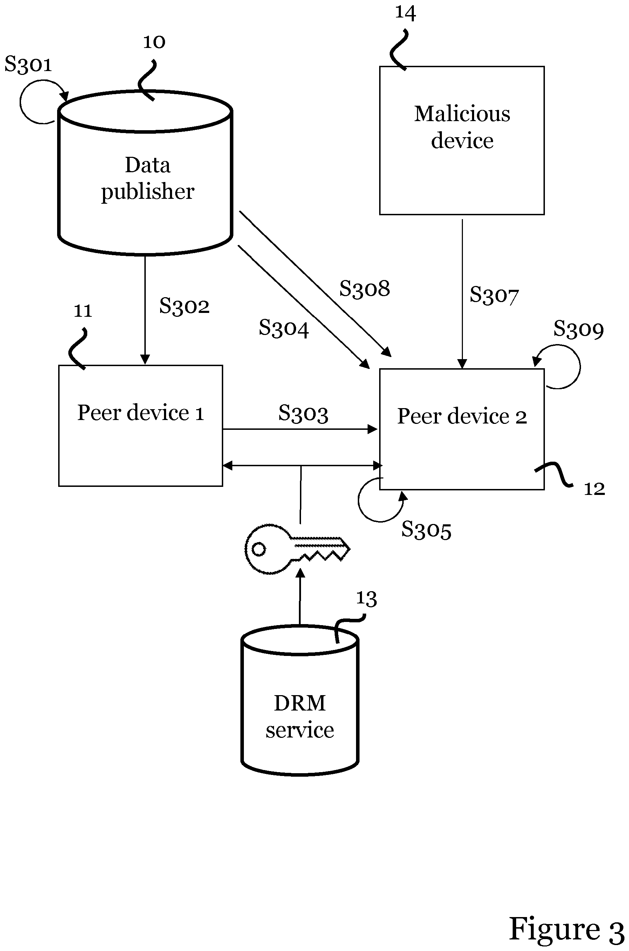

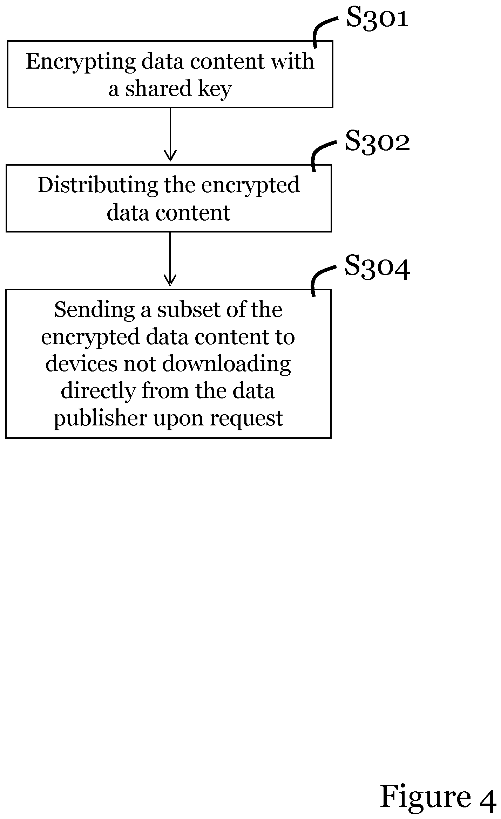

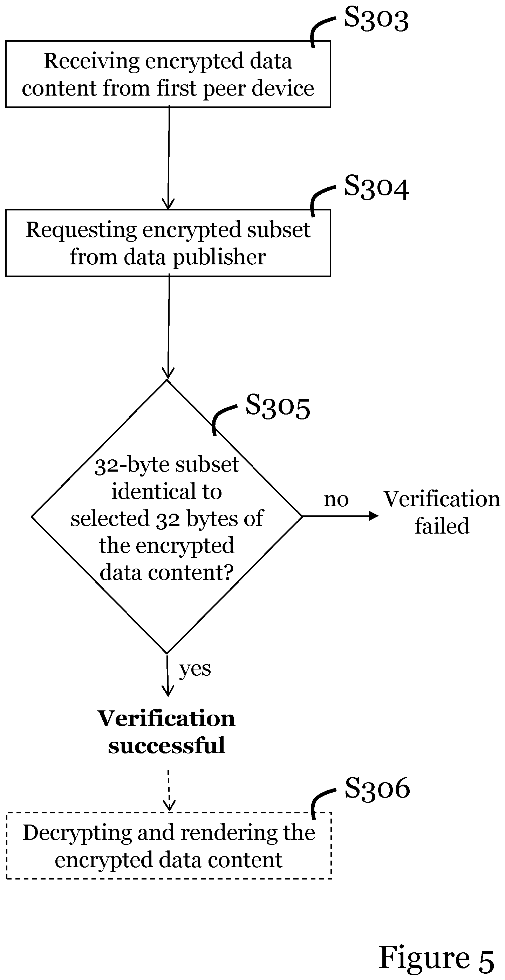

Figure 3 illustrates a solution to this problem as provided by an embodiment. Reference is further made to the flowcharts of Figures 4 and 5 illustrating an embodiment performed by the data publisher 10 and the second peer device 12, respectively.

Thus, in a first step S301, the data publisher 10 encrypts the data content to be distributed using a key shared with the other peer devices 11, 12 in the network as previously described and distributes the encrypted data content to the first peer device 11 in step S302. In practice, the network may comprise hundreds or even thousands of peer devices and the publisher 10 will typically perform direct distribution of the encrypted data content to a plurality of peer devices.

The second peer device 12 downloads, from the first peer device 11 in step S303, at least a fragment of the encrypted data content downloaded by the first peer device 11 in step S302 from the data publisher 10.

In order to allow a receiver of the encrypted data content to verify correctness of the encrypted data content downloaded in step S303, the receiver - in this case being the second peer device 12 - further downloads a small subset of the encrypted data content from the original data publisher 10 in step S304. In other words, intended receivers in the distribution network which do not download the data content directly from the data publisher 10 but from another peer device further downloads said small subset from the publisher 10.

It is noted that since the first peer device 11 does not download the data content from another peer device, but directly from the data publisher 10, the first peer device 11 does not require said subset in order to verify correctness of the encrypted data content received in step S302. Typically, the first peer device 11 verifies the data publisher 10 using a certificate received from the publisher 10, and the first peer device 11 may thus authenticate the received encrypted data content by verifying a digital signature provided to the encrypted data content by the data publisher 10.

As is understood, a fragment or stream distributed by the first peer device 11 (or the malicious device 14) to the second peer device 12 typically has a size of gigabytes (GBs), such as for instance somewhere in the range of 2-20 GB.

In contrast, the subset of the encrypted data fragment is typically in the order of hundreds of bits, such as e.g. 32 x 8 bits (i.e. 32 bytes). It is noted that the second peer device 12 receiving the encrypted subset must trust the issuer of said encrypted subset, i.e. the data publisher 10. As previously described, the data publisher 10 may have distributed its certificate to the peer devices of the network, thereby ensuring the authenticity of any data downloaded from the data publisher 10 by means of providing the data with a digital signature. In other words, the data publisher 10 may provide a trusted certificate having been signed by a root certificate.

The length of the encrypted data subset stipulates level of security; the greater the subset, the stronger the security, much like the length of an encryption key. In terms of security level, the encrypted data subset generally provides the same level of security as a hash function of corresponding length. Thus, a 256-bit encrypted data subset would provide the same level of security as a 256-bit hashing function such as SHA-256 ("Secure Hash Algorithm"), while a 512-bit encrypted data subset would provide the same level of security as SHA-512.

As mentioned above, the size of the encrypted data content to be rendered by a peer device - from which content the encrypted data subset is derived - is typically in the range of 1-20 GB, while the size of the derived subset is, say, 128-512 bits (i.e. 16-64 bytes). The relation between the encrypted data content and the encrypted data subset is thus typically at least 1 × 10⁹/64 = 15.625.000.

Assuming that a relatively small fragment of encrypted data content is downloaded, say 128 Mbit, while an encrypted data subset derived from the fragment has a length of 128 bits, the size of the subset is still only 1 ppm of the data content.

Thus, a small subset of the encrypted data content being distributed by the data publisher 10 in step S302 to the first peer device 11 (and further to the second peer device 12 in step S303) is downloaded in step S304 by the second peer device 12 from the data publisher 10. That is, intended recipients in the distribution network which downloads the data content from sources other than the data publisher 10 will turn to the data publisher for downloading the encrypted data subset having been derived from the downloaded encrypted data content.

The data publisher 10 is typically identified by a Uniform Resource Locator (URL) included in a so-called manifest file initially distributed to the peer devices in the network, which identifies the data publisher 10 and the data content fragments/streams which are distributed by the data publisher 10. Thus, upon downloading a particular fragment in step S303, the second peer device 12 identifies the URL of the data publisher 10 in the manifest file for the particular fragment (which may be provided with an identifier to be matched to a corresponding identifier in the manifest file) and downloads the encrypted data subset in step S304.

Assuming for instance that a piece of data content of 1 GB is encrypted by the data publisher in step S301 and distributed in step S302 to one or more peer devices in the network and further that a 32-byte (256 bits) subset of the encrypted data content is downloaded from the data publisher 10 by peer devices which downloads the encrypted data content from other peer devices. The 32-byte subset may be the first or last 32 bytes of the 1 GB encrypted data content or any consecutive 32 bytes of the 1 GB content. In the following, the subset is exemplified as being the last 32 bytes of the 1 GB encrypted data content. As is understood, the second peer device 12 must be aware of which part of the encrypted data fragment that the subset corresponds to, which may be information with which the second peer device 12 is preconfigured.

Upon receiving the encrypted data content from the first peer device 11 in step S303, the second peer device 11 will in step S305 verify whether or not the 32-byte subset downloaded in step S304 matches the last 32 bytes of the received encrypted data content. In this particular embodiment, the second peer device 12 compares the 32-byte subset received in step S304 with the last 32 bytes of the received encrypted data content. If the two 32-byte data sets are identical, the second peer device 12 is ensured that the received encrypted data content indeed originally was issued by the trusted data publisher 10 and has not been tampered with.

A 256-bit encrypted data subset may be used with AES-128 while a 512-bit encrypted subset is used with AES-256. That is, when utilizing AES at the data publisher 10 as the symmetric encryption scheme, the encrypted data subset downloaded from the data publisher 10 in step S304 may be selected to have twice the length of the shared symmetric key used for encryption/decryption.

Verification of the encrypted data content received in step S305 is thus advantageously successful and the encrypted data content may thus optionally be decrypted with the shared key provided by the DRM service 13, as illustrated in step S306 of Figure 5, and securely rendered by the second peer device 12, for instance on a video player.

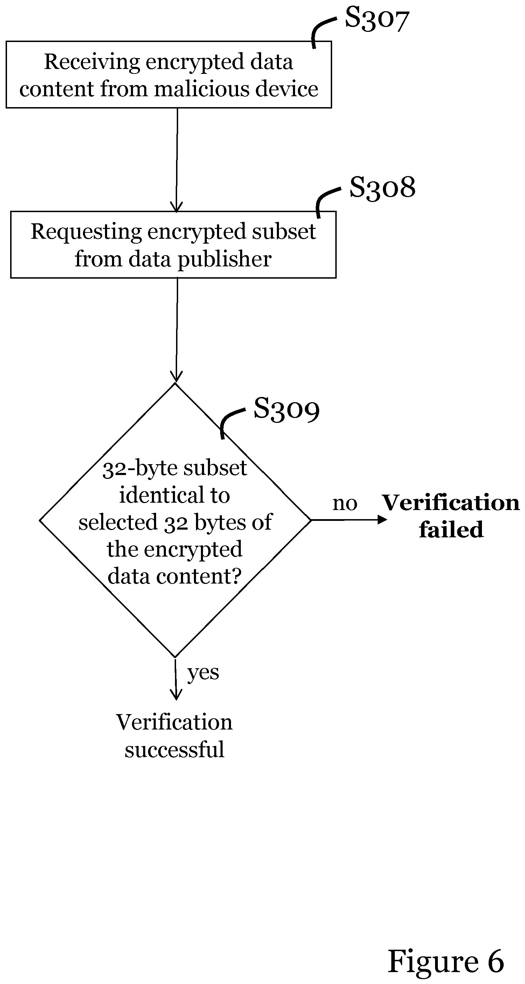

Now, with reference to Figures 3 and 6, if the malicious device 14 provides the second peer device 12 with encrypted malicious data in step S307, the second peer device 12 will download an encrypted data subset content from the data publisher 10 in step S308 and compare the last 32 bytes of the encrypted malicious data with the 32-byte encrypted data subset received from the data publisher 10 in step S309, and conclude that there is a mismatch. It is here assumed that the malicious device 14 is capable of labelling the encrypted malicious data with a correct identifier such that the second peer device 12 indeed successfully associates (based on said identifier) the malicious data with a fragment identified in the manifest file to belong to the URL of the data publisher 10. Should the malicious device 14 provide the second peer device 12 with encrypted malicious data which is not indicated in the manifest file to originate from the data publisher 10, no encrypted data subset will be downloaded in step S308 and the encrypted malicious data will be discarded.

It is noted that in the art, if the malicious device 14 is able to provide the encrypted malicious data with an identifier matching a data content fragment of the manifest file, the second peer device 12 would proceed to decrypting the encrypted malicious data, since the received encrypted malicious data indeed appears to originate from a trusted URL as specified in the manifest file. However, with step S308 of acquiring the subset from the data publisher 10 and the comparing in step S309 of the subset to a selected section of the encrypted malicious data, such spoofing attempt is detected and can successfully be averted.

In other words, since the 32-byte encrypted data subset received from the publisher 10 in step S308 is not identical to the 32 last bytes of the encrypted malicious data received in step S307, the second peer device 12 will advantageously not validate the received malicious data in step S309, and will thus not proceed with decrypting the encrypted malicious data for subsequent execution (potentially with a fatal result). Thus, verification of the encrypted (malicious) data in step S309 failed, being a purpose of the encrypted subset provided by the data publisher 10.

For a modern symmetric encryption algorithm like AES, a plaintext and its encrypted counterpart, commonly referred as cipher text, have a relationship being such that a single bit changed in the plain text has a 50% chance of changing also in the cipher text (i.e. a so-called bit avalanche occurs).

Consequently, to craft a malicious plaintext under the same encryption key which would generate a partly identical cipher text is computationally infeasible. That is, it is not computationally feasible for the malicious device 14 to encrypt a plain text to attain a cipher text where a 32-byte sequence of the cipher text would correspond to the encrypted 32-byte data subset created by the data publisher 10.

Typically, in the art, the security issues are resolved by having the data publisher apply asymmetric signing or use hashes, which would require corresponding actions to be taken at the peer devices.

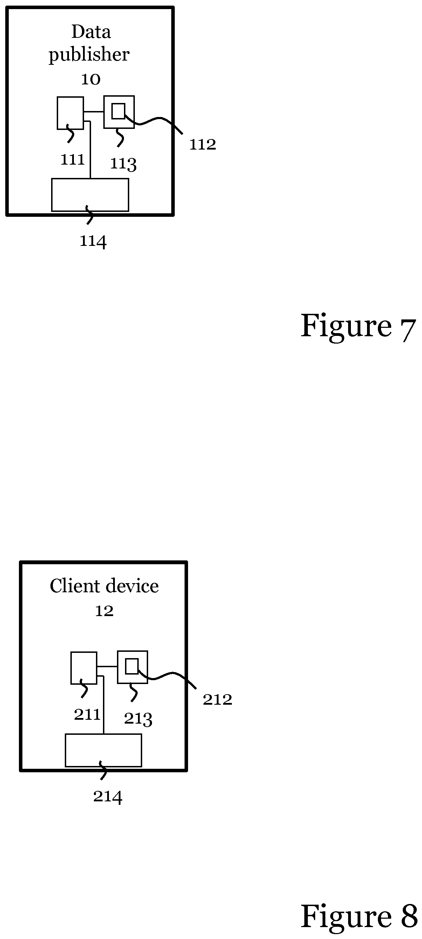

Figure 7 illustrates a data publishing device 10 according to an embodiment, where the steps of the method performed by the data publisher device 10 in practice are performed by a processing unit 111 embodied in the form of one or more microprocessors arranged to execute a computer program 112 downloaded to a storage medium 113 associated with the microprocessor, such as a Random Access Memory (RAM), a Flash memory or a hard disk drive. The processing unit 111 is arranged to cause the data publishing device 10 to carry out the method according to embodiments when the appropriate computer program 112 comprising computer-executable instructions is downloaded to the storage medium 113 and executed by the processing unit 111. The storage medium 113 may also be a computer program product comprising the computer program 112. Alternatively, the computer program 112 may be transferred to the storage medium 113 by means of a suitable computer program product, such as a Digital Versatile Disc (DVD) or a memory stick. As a further alternative, the computer program 112 may be downloaded to the storage medium 113 over a network. The processing unit 111 may alternatively be embodied in the form of a digital signal processor (DSP), an application specific integrated circuit (ASIC), a field-programmable gate array (FPGA), a complex programmable logic device (CPLD), etc. The data publishing device 10 further comprises a communication interface 114 (wired or wireless) over which the data publishing device 10 is configured to transmit and receive data.

Figure 8 illustrates a client device 12 according to an embodiment, where the steps of the method performed by the client device 12 in practice are performed by a processing unit 211 embodied in the form of one or more microprocessors arranged to execute a computer program 212 downloaded to a storage medium 213 associated with the microprocessor, such as a RAM, a Flash memory or a hard disk drive. The processing unit 211 is arranged to cause client device 12 to carry out the method according to embodiments when the appropriate computer program 212 comprising computer-executable instructions is downloaded to the storage medium 213 and executed by the processing unit 211. The storage medium 213 may also be a computer program product comprising the computer program 212. Alternatively, the computer program 212 may be transferred to the storage medium 213 by means of a suitable computer program product, such as a DVD or a memory stick. As a further alternative, the computer program 212 may be downloaded to the storage medium 213 over a network. The processing unit 211 may alternatively be embodied in the form of a DSP, an ASIC, an FPGA, a CPLD, etc. The client device 12 further comprises a communication interface 214 (wired or wireless) over which the client device 12 is configured to transmit and receive data.

The aspects of the present disclosure have mainly been described above with reference to a few embodiments and examples thereof. However, as is readily appreciated by a person skilled in the art, other embodiments than the ones disclosed above are equally possible within the scope of the disclosure, as defined by the appended patent claims.

Thus, while various aspects and embodiments have been disclosed herein, other aspects and embodiments will be apparent to those skilled in the art. The various aspects and embodiments disclosed herein are for purposes of illustration and are not intended to be limiting, with the true scope and spirit being indicated by the following claims.

## Claims

1. A method in a network of a data publisher device (10) distributing data content to receiving devices (11, 12) in the network, **characterized in** comprising:
encrypting (S301), at the data publisher device (10), the data content with a symmetric encryption key shared with the receiving devices (11, 12);
distributing (S302), from the data publisher device (10), the encrypted data content to one of the receiving devices (11);
receiving (S303, S307), at another one of the receiving devices (12), the encrypted data content from said one of the receiving devices (11);
sending (S304), from the data publisher device (10), a subset of the encrypted data content to said another one of the receiving devices (12) upon request; and
verifying (S305), at said another one of the receiving devices (12), whether or not the subset of the encrypted data content received from the data publisher device (10) matches a selected section of the encrypted data content received from said one of the receiving devices (11) in the network, wherein a match indicates that the encrypted data content received from said one of the receiving devices (11) can be trusted.

2. The method of claim 1, the subset of the encrypted data content having a size being less than 1 ppm of the encrypted data content from which it is derived.

3. A method of a device (12) of receiving data content in a network, **characterized in** comprising:
receiving (S303, S307) encrypted data content from another device (11, 14) in the network, the data content having been encrypted with a symmetric key shared with a trusted data publisher device (10);
requesting (S304), from the trusted data publisher device (10), a subset of the encrypted data content received from said another device (11) in the network;
verifying (S305) whether or not the subset of the encrypted data content received from the trusted data publisher device (10) matches a selected section of the encrypted data content received from said another device (11, 14) in the network, wherein a match indicates that the encrypted data content received from said another device (11) can be trusted.

4. The method of claim 3, the verifying (S305) whether or not the subset of the encrypted data content received from the trusted data publisher device (10) matches the selected section of the encrypted data content from another device (11) in the network comprising:
comparing the subset of the encrypted data content received from the trusted data publisher device (10) with the selected section of the encrypted data content received from said another device (11), wherein a match is verified if the subset of the encrypted data content is identical to the selected section of the encrypted data content.

5. The method of any one of claims 3 or 4, further comprising, if a match is verified:
decrypting (S306) and rendering the encrypted data content received from said another device (11), the decryption being performed using the symmetric key shared with the trusted data publisher device (10).

6. The method of any one of claims 3-5, further comprising:
receiving a certificate from the data publisher device (10), wherein the data publisher device (10) is considered trusted.

7. The method of any one of claims 3-6, further comprising:
identifying whether or not the received encrypted data content is indicated in a manifest file to be encrypted data content to be distributed by the trusted data publisher device (10) and if so requesting (S304) the subset of the encrypted data content from the trusted data publisher device (10) as indicated in the manifest file.

8. The method of claim 8, wherein in case the received encrypted data content is not indicated in the manifest file to be encrypted data content to be distributed by the trusted data publisher device (10), the received encrypted data content is discarded.

9. The method of any one of claims 3-8, the subset of the encrypted data content having a size being less than 1 ppm of the encrypted data content from which it is derived.

10. A computer program (112) comprising computer-executable instructions for causing a data publisher device (10) to perform steps recited in any one of claims 1-2 when the computer-executable instructions are executed on a processing unit (111) included in the data publisher device (10).

11. A computer program product comprising a computer readable medium (113), the computer readable medium having the computer program (112) according to claim 10 embodied thereon.

12. A computer program (112) comprising computer-executable instructions for causing a device (12) to perform steps recited in any one of claims 3-9 when the computer-executable instructions are executed on a processing unit (211) included in the device (12).

13. A computer program product comprising a computer readable medium (213), the computer readable medium having the computer program (212) according to claim 12 embodied thereon.

14. A network comprising a data publisher device (10) configured to distribute data content to receiving devices (11, 12) in the network, the data publisher device (10) comprising a processing unit (111) and a memory (113), said memory containing instructions (112) executable by said processing unit (111), whereby the data publisher device (10) is **characterized in** being operative to:
encrypt the data content with a secret encryption key shared with the receiving devices (11, 12);
distribute the encrypted data content to one of the receiving devices (11);
another one of the receiving devices (12) being operative to receive the encrypted data content from said one of the receiving devices (11);
the data publisher device (10) further being operative to: send a subset of the encrypted data content to said another one of the receiving devices (12) upon request; and;
verifying, at said another one of the receiving devices (12), whether or not the subset of the encrypted data content received from the data publisher device (10) matches a selected section of the encrypted data content received from said one of the receiving devices (11) in the network, wherein a match indicates that the encrypted data content received from said one of the receiving devices (11) can be trusted.

15. A device (12) configured to receive data content in a network, comprising a processing unit (211) and a memory (213), said memory containing instructions (212) executable by said processing unit (211), whereby the device (12) is **characterized in** being operative to:
receive encrypted data content from another device (11, 14) in the network, the data content having been encrypted with a symmetric key shared with a trusted data publisher device (10);
request, from the trusted data publisher device (10), a subset of the encrypted data content received from said another device (11) in the network;
verify whether or not the subset of the encrypted data content received from the trusted data publisher device (10) matches a selected section of the encrypted data content received from said another device (11, 14) in the network, wherein a match indicates that the encrypted data content received from said another device (11) can be trusted.

## Patentansprüche

1. Verfahren in einem Netzwerk einer Datenherausgebervorrichtung (10), die Dateninhalte an empfangende Vorrichtungen (11, 12) in dem Netzwerk verteilt, **dadurch gekennzeichnet, dass** es umfasst:
Verschlüsseln (S301), in der Datenherausgebervorrichtung (10), der Dateninhalte mit einem symmetrischen Verschlüsselungsschlüssel, der mit den empfangende Vorrichtungen (11, 12) gemeinsam genutzt wird;
Verteilen (S302), von der Datenherausgebervorrichtung (10), der verschlüsselten Dateninhalte an eine der empfangenden Vorrichtungen (11);
Empfangen (S303, S307), in einer anderen der empfangenden Vorrichtungen (12), der verschlüsselten Dateninhalte von der einen der empfangenden Vorrichtungen (11);
Senden (S304), von der Datenherausgebervorrichtung (10), einer Teilmenge der verschlüsselten Dateninhalte auf Anforderung an die andere der empfangenden Vorrichtungen (12); und
Verifizieren (S305), in der anderen der empfangenden Vorrichtungen (12), ob die Teilmenge der von der Datenherausgebervorrichtung (10) empfangenen verschlüsselten Dateninhalte mit einem ausgewählten Abschnitt der von der einen der empfangenden Vorrichtungen (11) in dem Netzwerk empfangenen verschlüsselten Dateninhalte übereinstimmt oder nicht, wobei eine Übereinstimmung angibt, dass den von der einen der empfangenden Vorrichtungen (11) empfangenen verschlüsselten Dateninhalten vertraut werden kann.

2. Verfahren nach Anspruch 1, wobei die Teilmenge der verschlüsselten Dateninhalte eine Größe von weniger als 1 ppm der verschlüsselten Dateninhalte, von denen sie abgeleitet ist, aufweist.

3. Verfahren einer Vorrichtung (12) zum Empfangen von Dateninhalten in einem Netzwerk, **dadurch gekennzeichnet, dass** es umfasst:
Empfangen (S303, S307) verschlüsselter Dateninhalte von einer anderen Vorrichtung (11, 14) in dem Netzwerk, wobei die Dateninhalte mit einem symmetrischen Schlüssel verschlüsselt wurden, der mit einer vertrauenswürdigen Datenherausgebervorrichtung (10) gemeinsam genutzt wird;
Anfordern (S304), von der vertrauenswürdigen Datenherausgebervorrichtung (10), einer Teilmenge der verschlüsselten Dateninhalte, die von der anderen Vorrichtung (11) in dem Netzwerk empfangen wurden;
Verifizieren (S305), ob die Teilmenge der von der vertrauenswürdigen Datenherausgebervorrichtung (10) empfangenen verschlüsselten Dateninhalte mit einem ausgewählten Abschnitt der von der anderen Vorrichtung (11, 14) in dem Netzwerk empfangenen verschlüsselten Dateninhalte übereinstimmt oder nicht, wobei eine Übereinstimmung angibt, dass den von der anderen Vorrichtung (11) empfangenen verschlüsselten Dateninhalten vertraut werden kann.

4. Verfahren nach Anspruch 3, wobei das Verifizieren (S305), ob die Teilmenge der von der vertrauenswürdigen Datenherausgebervorrichtung (10) empfangenen verschlüsselten Dateninhalte mit dem ausgewählten Abschnitt der verschlüsselten Dateninhalte von einer anderen Vorrichtung (11) in dem Netzwerk übereinstimmt oder nicht, umfasst:
Vergleichen der Teilmenge der von der vertrauenswürdigen Datenherausgebervorrichtung (10) empfangenen verschlüsselten Dateninhalte mit dem ausgewählten Abschnitt der von der anderen Vorrichtung (11) empfangenen verschlüsselten Dateninhalte, wobei eine Übereinstimmung verifiziert wird, falls die Teilmenge der verschlüsselten Dateninhalte mit dem ausgewählten Abschnitt der verschlüsselten Dateninhalte identisch ist.

5. Verfahren nach einem der Ansprüche 3 oder 4, das des Weiteren umfasst, falls eine Übereinstimmung verifiziert wird:
Entschlüsseln (S306) und Wiedergeben der von der anderen Vorrichtung (11) empfangenen verschlüsselten Dateninhalte, wobei die Entschlüsselung unter Verwendung des symmetrischen Schlüssels durchgeführt wird, der mit der vertrauenswürdigen Datenherausgebervorrichtung (10) gemeinsam genutzt wird.

6. Verfahren nach einem der Ansprüche 3-5, das des Weiteren umfasst:
Empfangen eines Zertifikats von der Datenherausgebervorrichtung (10), wobei die Datenherausgebervorrichtung (10) als vertrauenswürdig angesehen wird.

7. Verfahren nach einem der Ansprüche 3-6, das des Weiteren umfasst:
Identifizieren, ob die empfangenen verschlüsselten Dateninhalte in einer Manifestdatei als verschlüsselte Dateninhalte angegeben sind, die durch die vertrauenswürdige Datenherausgebervorrichtung (10) zu verteilen sind, und falls ja, Anfordern (S304) der Teilmenge der verschlüsselten Dateninhalte von der vertrauenswürdigen Datenherausgebervorrichtung (10), wie in der Manifestdatei angegeben.

8. Verfahren nach Anspruch 8, wobei in dem Fall, dass die empfangenen verschlüsselten Dateninhalte in der Manifestdatei nicht als verschlüsselte Dateninhalte angegeben sind, die durch die vertrauenswürdige Datenherausgebervorrichtung (10) zu verteilen sind, die empfangenen verschlüsselten Dateninhalte verworfen werden.

9. Verfahren nach einem der Ansprüche 3-8, wobei die Teilmenge der verschlüsselten Dateninhalte eine Größe von weniger als 1 ppm der verschlüsselten Dateninhalte, von denen sie abgeleitet ist, aufweist.

10. Computerprogramm (112), das computerausführbare Instruktionen umfasst, um eine Datenherausgebervorrichtung (10) zu veranlassen, die in einem der Ansprüche 1 und 2 genannten Schritte durchzuführen, wenn die computerausführbaren Instruktionen in einer Verarbeitungseinheit (111), die in der Datenherausgebervorrichtung (10) enthalten ist, ausgeführt werden.

11. Computerprogrammprodukt, das ein computerlesbares Medium (113) umfasst, wobei auf dem computerlesbaren Medium das Computerprogramm (112) nach Anspruch 10 verkörpert ist.

12. Computerprogramm (112), das computerausführbare Instruktionen umfasst, um eine Vorrichtung (12) zu veranlassen, die in einem der Ansprüche 3-9 genannten Schritte durchzuführen, wenn die computerausführbaren Instruktionen in einer Verarbeitungseinheit (211), die in der Vorrichtung (12) enthalten ist, ausgeführt werden.

13. Computerprogrammprodukt, das ein computerlesbares Medium (213) umfasst, wobei auf dem computerlesbaren Medium das Computerprogramm (212) nach Anspruch 12 verkörpert ist.

14. Netzwerk, das eine Datenherausgebervorrichtung (10) umfasst, die dazu eingerichtet ist, Dateninhalte an empfangende Vorrichtungen (11, 12) in dem Netzwerk zu verteilen, wobei die Datenherausgebervorrichtung (10) eine Verarbeitungseinheit (111) und einen Speicher (113) umfasst, wobei der Speicher Instruktionen (112) enthält, die durch die Verarbeitungseinheit (111) ausführbar sind, wobei die Datenherausgebervorrichtung (10) **dadurch gekennzeichnet ist, dass** sie geeignet ist zum:
Verschlüsseln der Dateninhalte mit einem geheimen Verschlüsselungsschlüssel, der mit den empfangenden Vorrichtungen (11, 12) gemeinsam genutzt wird;
Verteilen der verschlüsselten Dateninhalte an eine der empfangenden Vorrichtungen (11);
wobei eine andere der empfangenden Vorrichtungen (12) geeignet ist, die verschlüsselten Dateninhalte von der einen der empfangenden Vorrichtungen (11) zu empfangen;
wobei die Datenherausgebervorrichtung (10) des Weiteren geeignet ist zum: Senden einer Teilmenge der verschlüsselten Dateninhalte auf Anforderung an die andere der empfangenden Vorrichtungen (12); und
Verifizieren, in der anderen der empfangenden Vorrichtungen (12), ob die Teilmenge der von der Datenherausgebervorrichtung (10) empfangenen verschlüsselten Dateninhalte mit einem ausgewählten Abschnitt der von der einen der empfangenden Vorrichtungen (11) in dem Netzwerk empfangenen verschlüsselten Dateninhalte übereinstimmt oder nicht, wobei eine Übereinstimmung angibt, dass den von der einen der empfangenden Vorrichtungen (11) empfangenen verschlüsselten Dateninhalten vertraut werden kann.

15. Vorrichtung (12), die dazu eingerichtet ist, Dateninhalte in einem Netzwerk zu empfangen, umfassend eine Verarbeitungseinheit (211) und einen Speicher (213), wobei der Speicher Instruktionen (212) enthält, die durch die Verarbeitungseinheit (211) ausführbar sind, wobei die Vorrichtung (12) **dadurch gekennzeichnet ist, dass** sie geeignet ist zum:
Empfangen verschlüsselter Dateninhalte von einer anderen Vorrichtung (11, 14) in dem Netzwerk, wobei die Dateninhalte mit einem symmetrischen Schlüssel verschlüsselt wurden, der mit einer vertrauenswürdigen Datenherausgebervorrichtung (10) gemeinsam genutzt wird;
Anfordern, von der vertrauenswürdigen Datenherausgebervorrichtung (10), einer Teilmenge der verschlüsselten Dateninhalte, die von der anderen Vorrichtung (11) in dem Netzwerk empfangen wurden;
Verifizieren, ob die Teilmenge der von der vertrauenswürdigen Datenherausgebervorrichtung (10) empfangenen verschlüsselten Dateninhalte mit einem ausgewählten Abschnitt der von der anderen Vorrichtung (11, 14) in dem Netzwerk empfangenen verschlüsselten Dateninhalte übereinstimmt oder nicht, wobei eine Übereinstimmung angibt, dass den von der anderen Vorrichtung (11) empfangenen verschlüsselten Dateninhalten vertraut werden kann.

## Revendications

1. Procédé dans un réseau d'un dispositif éditeur de données (10) distribuant un contenu de données à des dispositifs récepteurs (11, 12) dans le réseau, **caractérisé en ce qu'**il comprend :
le chiffrement (S301), au niveau du dispositif éditeur de données (10), du contenu de données avec une clé de chiffrement symétrique partagée avec les dispositifs récepteurs (11, 12) ;
la distribution (S302), à partir du dispositif éditeur de données (10), du contenu de données chiffré à un des dispositifs récepteurs (11) ;
la réception (S303, S307), au niveau d'un autre des dispositifs récepteurs (12), du contenu de données chiffré depuis ledit un des dispositifs récepteurs (11) ;
l'envoi (S304), depuis le dispositif éditeur de données (10), d'un sous-ensemble du contenu de données chiffré audit un autre des dispositifs récepteurs (12) sur demande ; et
la vérification (S305), au niveau dudit un autre des dispositifs récepteurs (12), si le sous-ensemble du contenu de données chiffré reçu depuis le dispositif éditeur de données (10) correspond ou non à une section sélectionnée du contenu de données chiffré reçu depuis ledit un des dispositifs récepteurs (11) dans le réseau, dans lequel une correspondance indique que le contenu de données chiffré reçu depuis ledit un des dispositifs récepteurs (11) est digne de confiance.

2. Procédé selon la revendication 1, le sous-ensemble du contenu de données chiffré présentant une taille inférieure à 1 ppm du contenu de données chiffré duquel il est déduit.

3. Procédé d'un dispositif (12) de réception d'un contenu de données dans un réseau, **caractérisé en ce qu'**il comprend :
la réception (S303, S307) d'un contenu de données chiffré depuis un autre dispositif (11, 14) dans le réseau, le contenu de données ayant été chiffré avec une clé symétrique partagée avec un dispositif éditeur de données digne de confiance (10) ;
la demande (S304), au dispositif éditeur de données digne de confiance (10), d'un sous-ensemble du contenu de données chiffré reçu depuis ledit autre dispositif (11) dans le réseau ;
la vérification (S305) si le sous-ensemble du contenu de données chiffré reçu depuis le dispositif éditeur de données digne de confiance (10) correspond ou non à une section sélectionnée du contenu de données chiffré reçu depuis ledit autre dispositif (11, 14) dans le réseau, dans lequel une correspondance indique que le contenu de données chiffré reçu depuis ledit autre dispositif (11) est digne de confiance.

4. Procédé selon la revendication 3, la vérification (S305) si le sous-ensemble du contenu de données chiffré reçu depuis le dispositif éditeur de donnée digne de confiance (10) correspond ou non à la section sélectionnée du contenu de données chiffré provenant d'un autre dispositif (11) dans le réseau comprenant :
la comparaison du sous-ensemble du contenu de données chiffré reçu depuis le dispositif éditeur de données digne de confiance (10) à la section sélectionnée du contenu de données chiffré reçu depuis ledit autre dispositif (11), dans lequel une correspondance est vérifiée si le sous-ensemble du contenu de données chiffré est identique à la section sélectionnée du contenu de données chiffré.

5. Procédé selon la revendication 3 ou 4, comprenant en outre, si une correspondance est vérifiée :
le déchiffrement (S306) et la restitution du contenu de données chiffré reçu depuis ledit autre dispositif (11), le déchiffrement étant réalisé à l'aide de la clé symétrique partagée avec le dispositif éditeur de données digne de confiance (10).

6. Procédé selon l'une quelconque des revendications 3 à 5, comprenant en outre :
la réception d'un certificat depuis le dispositif éditeur de données (10), dans lequel le dispositif éditeur de données (10) est considéré comme étant digne de confiance.

7. Procédé selon l'une quelconque des revendications 3 à 6, comprenant en outre :
l'identification si le contenu de données chiffré reçu est ou non indiqué dans un fichier manifeste comme étant un contenu de données chiffré à distribuer par le dispositif éditeur de données digne de confiance (10) et, si tel est le cas, la demande (S304) du sous-ensemble du contenu de données chiffré au dispositif éditeur de donnée digne de confiance (10) tel qu'indiqué dans le fichier manifeste.

8. Procédé selon la revendication 8, dans lequel, dans le cas où le contenu de données chiffré reçu n'est pas indiqué dans le fichier manifeste comme étant un contenu de données chiffré à distribuer par le dispositif éditeur de données digne de confiance (10), le contenu de données chiffré reçu est rejeté.

9. Procédé selon l'une quelconque des revendications 3 à 8, le sous-ensemble du contenu de données chiffré présentant une taille inférieure à 1 ppm du contenu de données chiffré duquel il est déduit.

10. Programme informatique (112) comprenant des instructions exécutables par ordinateur pour amener un dispositif éditeur de données (10) à réaliser des étapes selon l'une quelconque des revendications 1 et 2 lorsque les instructions exécutables par ordinateur sont exécutées sur une unité de traitement (111) comprise dans le dispositif éditeur de données (10).

11. Produit programme informatique comprenant un support lisible par ordinateur (113), le programme informatique (112) selon la revendication 10 étant incorporé sur le support lisible par ordinateur.

12. Programme informatique (112) comprenant des instructions exécutables par ordinateur pour amener un dispositif (12) à réaliser des étapes selon l'une quelconque des revendications 3 à 9 lorsque les instructions exécutables par ordinateur sont exécutées sur une unité de traitement (211) comprise dans le dispositif (12).

13. Produit programme informatique comprenant un support lisible par ordinateur (213), le programme informatique (212) selon la revendication 12 étant incorporé sur le support lisible par ordinateur.

14. Réseau comprenant un dispositif éditeur de données (10) configuré pour distribuer un contenu de données à des dispositifs récepteurs (11, 12) dans le réseau, le dispositif éditeur de données (10) comprenant une unité de traitement (111) et une mémoire (113), ladite mémoire contenant des instructions (112) exécutables par ladite unité de traitement (111), de telle manière que le dispositif éditeur de données (10) soit **caractérisé en ce qu'**il est fonctionnel pour :
chiffrer le contenu de données avec une clé de chiffrement secrète partagée avec les dispositifs récepteurs (11, 12) ;
distribuer le contenu de données chiffré à un des dispositifs récepteurs (11) ;
un autre des dispositifs récepteurs (12) étant fonctionnel pour recevoir le contenu de données chiffré depuis ledit un des dispositifs récepteurs (11) ;
le dispositif éditeur de données (10) étant en outre fonctionnel pour : envoyer un sous-ensemble du contenu de données chiffré audit un autre des dispositifs récepteurs (12) sur demande ; et
vérifier, au niveau dudit un autre des dispositifs récepteurs (12), si le sous-ensemble du contenu de données chiffré reçu depuis le dispositif éditeur de données (10) correspond ou non à une section sélectionnée du contenu de données chiffré reçu depuis ledit un des dispositifs récepteurs (11) dans le réseau, dans lequel une correspondance indique que le contenu de données chiffré reçu depuis ledit un des dispositifs récepteurs (11) est digne de confiance.

15. Dispositif (12) configuré pour recevoir un contenu de données dans un réseau, comprenant une unité de traitement (211) et une mémoire (213), ladite mémoire contenant des instructions (212) exécutables par ladite unité de traitement (211), de telle manière que le dispositif (12) soit **caractérisé en ce qu'**il est fonctionnel pour :
recevoir un contenu de données chiffré depuis un autre dispositif (11, 14) dans le réseau, le contenu de données ayant été chiffré avec une clé symétrique partagée avec un dispositif éditeur de données digne de confiance (10) ;
demander, au dispositif éditeur de données digne de confiance (10), un sous-ensemble du contenu de données chiffré reçu depuis ledit autre dispositif (11) dans le réseau ;
vérifier si le sous-ensemble du contenu de données chiffré reçu depuis le dispositif éditeur de données digne de confiance (10) correspond ou non à une section sélectionnée du contenu de données chiffré reçu depuis ledit autre dispositif (11, 14) dans le réseau, dans lequel une correspondance indique que le contenu de données chiffré reçu depuis ledit autre dispositif (11) est digne de confiance.
